Europäisches Patentamt

European Patent Office

Office européen des brevets

(19)

(11) Veröffentlichungsnummer: **0 027 277**
**B1**

# (12) EUROPÄISCHE PATENTSCHRIFT

(45) Veröffentlichungstag der Patentschrift:
**18.04.84**

(21) Anmeldenummer: **80106276.1**

(22) Anmeldetag: **15.10.80**

(51) Int. Cl.³: **D 04 H  1/00,** C 03 B  37/10

(54) **Verfahren zur Herstellung von Mineralfasermatten oder -platten und Einrichtung zu deren Durchführung.**

(30) Priorität: **15.10.79 DE 2941664**

(43) Veröffentlichungstag der Anmeldung:
**22.04.81 Patentblatt 81/16**

(45) Bekanntmachung des Hinweises auf die Patenterteilung:
**18.04.84 Patentblatt 84/16**

(84) Benannte Vertragsstaaten:
**AT DE FR GB NL SE**

(56) Entgegenhaltungen:
**DE - B - 1 021 781**
**US - A - 2 925 117**
**US - A - 3 642 554**
**US - A - 3 941 530**
**US - A - 4 145 202**

(73) Patentinhaber: **Liebert, Horst, Reisbergstrasse 14,
D-7101 Obergruppenbach (DE)**

(72) Erfinder: **Liebert, Horst, Reisbergstrasse 14,
D-7101 Obergruppenbach (DE)**

(74) Vertreter: **Wuesthoff, Franz, Dr.-Ing. et al, Patentanwälte
Wuesthoff -v. Pechmann-Behrens-Goetz
Schweigerstrasse 2, D-8000 München 90 (DE)**

Verfahren zur Herstellung von Mineralfasermatten oder -platten und Einrichtung zu deren Durchführung

Die Erfindung betrifft ein Verfahren und eine Einrichtung zur Herstellung von Mineralfasermatten oder -platten, bei denen Roh- bzw. Ausgangsmaterialien in einem Schmelzofen verflüssigt, in einer Spinnmaschine zu Fasern versponnen, danach mit einem Bindemittel versetzt und in einer Sammelkammer (Ablage- und Mattenformkammer) zu Matten abgelegt, in einer Härtekammer ausgehärtet, dann seitlich besäumt und in Längsabschnitte unterteilt werden. Die Erfindung richtet sich auf eine Wiederverwertung von bei der Herstellung anfallenden Abfallprodukten.

Mineralfasermatten oder -platten werden in zunehmendem Masse als Dämmelemente für die Wärme- und Schallisolierung und darüberhinaus für den Brandschutz eingesetzt.

Bei der Herstellung von Matten oder Platten aus Mineralfasern werden die in Bunkern gelagerten Rohmaterialien über ein Wiege- und Fördersystem einem Schmelzofen aufgegeben, in dem sie unter hohen Temperaturen verflüssigt werden. Der flüssige Ausgangsmaterialstrom wird auf eine Spinnmaschine gegeben, die kurze Mineralfasern erzeugt, die dann in einer Faserablage- und Mattenformkammer nach Zufuhr eines Bindemittels in Form von Matten abgelagert werden. Beim Verspinnen und vor dem Ablagern fallen mit Temperaturen nahe dem Schmelzpunkt kontinuierlich mineralische Abfallprodukte in Form von Schmelzperlen, Schlacke, losen Faserteilen und dgl. an. In einer anschliessenden Härtekammer entsteht die Rohmatte in der benötigten Enddicke. Diese Rohmatte ist von ungenauer Breite und muss daher seitlich besäumt werden. Sie passiert daher im weiteren Verlauf eine Besäumstation, in der sie auf die gewünschte Länge geschnitten wird. Mit einer Fehlerkontrolle endet der Herstellungsprozess.

Ein Nachteil dieses bekannten Herstellungsverfahrens ist der unverhältnismässig hohe Anteil an Abfallprodukten in Form von Schmelzperlen, Schlacke, losen Faserbestandteilen, die nach der Spinnmaschine anfallen, und mit Harz getränkten Randabschnitten, die teilweise unausgehärtet sind, und ganzen Ausschussplatten, die in der Besäumstation und bei der End- bzw. Fehlerkontrolle anfallen.

Diese Abfallprodukte werden bisher praktisch ausnahmslos einer geordneten Deponie zugeführt, da sie in der anfallenden Form nicht mehr verwertbar sind. Gemäss einem bekannten Vorschlag (US-A-145 202) werden lose Abfallglasfasern in Stapelfasern geschnitten, einem Ofen zur Verbrennung verbrennbarer Rückstände zugeführt und anschliessend heiss einer Zerkleinerungsmaschine aufgegeben, in welcher sie in kleine Glasteile zerschlagen werden, um anschliessend pneumatisch dem Schichtschmelzofen, insbesondere einem Kupolofen, der Glasfaseranlage zugegeben zu werden. Es ist jedoch nicht möglich, grössere Mengen derartigen Glaspulvers dem Schmelzofen aufzugeben, ohne ihn zu verstopfen oder zumindest dessen Betrieb empfindlich zu stören.

Es ist ebenfalls bekannt, Randabschnitte einer Besäumstation für Mineralfaserplatten zu zerkleinern, desintegrieren und mit Binder zu versetzen, um diese aufgearbeiteten Abfälle erneut unmittelbar zu Fasermatten zu verarbeiten (US-A-2 925 117).

Eine vollständige Verwertung aller bei der Mattenherstellung anfallender Faserabfälle zur Erzeugung von Fasermatten der Qualität, von denen die Abfälle stammen, ist auf diese Weise nicht möglich.

Die Erfindung verfolgt den Zweck, die Abfallprodukte einer vollständigen Verwertung zuzuführen.

Der Erfindung liegt daher die Aufgabe zugrunde, das bekannte Verfahren zur Herstellung von Mineralfaserplatten oder -matten dahingehend fortzuentwickeln, dass eine sinnvolle Verwertung aller Abfallprodukte ermöglicht ist.

Der Erfindung liegt ferner die Aufgabe zugrunde, eine Vorrichtung zur Durchführung des erfindungsgemässen Verfahrens zu schaffen.

Ein diese Aufgabe lösendes Verfahren ist im Patentanspruch 1 und hinsichtlich vorteilhafter Ausgestaltungen in den Ansprüchen 2 bis 4 gekennzeichnet.

Das Verfahren gemäss der Erfindung sieht bei dem eingangs genannten bekannten Verfahren vor, dass die beim Verspinnen und bei den weiteren Behandlungsschritten bis zur Lagerung mit Temperaturen nahe dem Schmelzpunkt kontinuierlich anfallenden mineralischen Abfallprodukte (Spinnabfall) einschliesslich deren Schlacke sofort heisszerkleinert, zum Ausgleich einer Abkühlung auf Plastifizierungstemperatur (etwa 700 bis 740°C) wiedererhitzt und dann heissbrikettiert werden, worauf die Briketts den zu verflüssigenden Ausgangsmaterialien zugegeben werden.

Vorteilhafter Weise werden die Briketts vor der Zugabe zu den Ausgangsmaterialien nach einer Abkühlung zwischengelagert. Diese Zwischenlagerung kann ebenso wie die Lagerung der Ausgangsmaterialien in Bunkern erfolgen, aus denen sie ebenso wie diese abgezogen und, in den Schmelzofen gefördert werden.

Eine weitere Ausgestaltung des erfindungsgemässen Verfahrens sieht vor, dass die beim Besäumen und Unterteilen der Fasermatte(n) in Längsabschnitte anfallenden mineralischen Abfallprodukte zerfasert, in aufgelockerter Form vorerhitzt und den beim Verspinnen anfallenden heissen Abfallprodukten vor dem Brikettieren, zweckmässigerweise vor deren Wiedererhitzen und gegebenenfalls Zerkleinern, zugegeben werden.

Das erfindungsgemässe Verfahren ermöglicht es, die Abfallprodukte direkt in den Produktionsprozess zurückzuführen. Im Bereich zwischen der Spinnmaschine und der Sammel-(Ablage- und Mattenform)-kammer, in dem der grösste Anteil der Abfallprodukte mit Temperaturen nahe dem Schmelzpunkt in Form von Schmelzperlen, Fasern und Schlacke kontinuierlich anfällt, weisen diese Abfallprodukte einen sehr hohen Wärmeinhalt auf, der durch die unmittelbare Weiterverarbeitung (also ohne starke Zwischenabkühlung) weitgehend erhalten und dem Brikettieren nutzbar gemacht wird.

Um dies zu ermöglichen, schlägt die Erfindung eines Einrichtung vor, die gekennzeichnet ist durch eine der Aufnahme der beim Verfahren anfallenden Abfallprodukte dienenden wärmeisolierte Kammer, welche der Spinnmaschine unmittelbar nachgeordnet ist und in welcher eine Zerkleinerungsmaschine zur Zerkleinerung der beim Verspinnen anfallenden mineralischen Abfallprodukte angeordnet ist, und mit welcher ein Durchlaufofen zum Erhitzen der zerkleinerten Abfallprodukte unmittelbar verbunden ist, sowie durch eine dem Durchlaufofen nachgeordnete Wälzdruck-Heissbrikettiermaschine und durch eine Fördereinrichtung zur Aufgabe der erzeugten Briketts in einen der Spinnmaschine vorgeordneten Schmelzofen. Durch die wärmeisolierte Kammer wird vermieden, dass der hohe Wärmeinhalt der Spinnabfälle sowie deren gute Brikettiereigenschaften aufgrund der frischen Oberfläche verlorengehen. Sie können daher als Bindemittel bzw. Haftvermittler bei der Brikettierung, insbes. gegenüber den Mattenabfällen, wirken.

Eine Ausgestaltung dieser Erfindung sieht vor, dass der Heissbrikettiermaschine für die Zwischenlagerung der Briketts ein Zwischenbunker nachgeordnet ist.

Um die aus der Zerfaserungsmaschine für die beim Besäumen und Unterteilen in Längsabschnitte anfallenden Abfallprodukte austretenden Fasern und Faserbüschel zunächst vorwärmen zu können, weist die wärmeisolierte Kammer im Bereich nach der Zerkleinerungsmaschine zweckmässigerweise eine Vorheizkammer auf, mit deren Einlassende der Auslass der Zerfaserungsmaschine verbunden ist. Danach vereinigen sich die zerkleinerten Spinnabfälle mit den vorgewärmten Fasern und Faserbüscheln aus den Mattenrandabschnitten und Ausschussplatten, um dann gemeinsam in den Durchlaufofen zu gelangen. Auf diese Weise werden die zerfaserten Mattenabfälle vorgewärmt, noch bevor sie mit den Spinnabfällen in den Durchlaufofen und von diesem in die Heissbrikettiermaschine gelangen. Die im Durchlaufofen zugeführte Wärmeenergie dient im wesentlichen dem Ausgleich von Wärmeverlusten.

Das aus diesem Durchlaufofen austretende heisse und daher noch nicht erstarrte grobkörnige Abfallprodukt wird in der Wälzdruck-Heissbrikettiermaschine zu Briketts definierter Abmessungen gepresst, die vor ihrer Wiederverwendung, gegebenenfalls nach Abkühlung, zwischengelagert werden. Grösse und Form der Briketts sind auf Grösse und Form der Rohmaterialien abzustimmen. Seifenstückform und -Grösse sind vielfach gut geeignet.

Es hat sich gezeigt, dass sich das erfindungsgemässe Verfahren technisch einwandfrei und preiswert mit bekannten Maschinen durchzuführen lässt, insbes., wenn die zerkleinerten bzw. zerfaserten Abfallprodukte unter Ausnützung ihres Wärmeinhaltes nach weiterer Erwärmung heissbrikettiert werden. Die Erfindung ermöglicht es, verschärfte gesetzliche Auflagen zum Schutze der Umwelt einzuhalten und den steigenden Kosten für die Abfuhr und geordnete Deponie wirksam zu begegnen.

Ein Ausführungsbeispiel der Erfindung ist anhand einer Zeichnung näher erläutert, die das Fliessschema einer Anlage zur Herstellung von Fasermatten und eine Einrichtung zur Durchführung des erfindungsgemässen Verfahrens zeigt.

Über eine Förderleitung 1 gelangen Rohprodukte in Bunker 2, 3 und 4, aus denen sie über ein Wiegesystem 5 und eine weitere Fördereinrichtung 5' in einen Schmelzofen, der als Kupolofen ausgebildet sein kann, gelangen. In diesem werden sie verflüssigt, so dass sie dann einer Spinnmaschine 7, z.B. mit vier schnell rotierenden Walzen, aufgegeben werden können, mit der dünne Mineralfasern aufgrund der schnellen Rotation der Walzen, auf die die aus dem Schmelzofen austretende Schmelze aufgeleitet wird, erzeugt werden, die in eine Sammelkammer 8 bzw. Faserablage- und Mattenformkammer gelangen. In diese wird ein Bindemittel gegeben, das für den Faserverband in der Matte sorgt. In einer anschliessenden Härtekammer 9 entsteht die Rohmatte in der benötigten Enddicke. Diese passiert dann eine Besäumstation 10, in der die beiden Längskanten besäumt werden, und dann in eine Formatierstation 11, in der die erzeugte durchgehende Matte durch Querschnitte zu längeren Matten oder kürzeren Platten aufgeteilt wird. Im Anschluss hieran erfolgt die End- bzw. Fehlerkontrolle in einer Station 12, in welcher fehlerhafte Matten ausgeschieden werden. Über einen Förderer 13 werden die Matten odert Platten, die die Fehlerkontrolle als einwandfrei passiert haben, zur weiteren Verpackung abgeführt.

Während die nach der Spinnmaschine und nach der Besäumstation 10, der Formatierstation 11 und der Endkontrollstation 12 anfallenden Abfallprodukte bisher ausnahmslos einer geordneten Deponie zugeführt wurden, da sie in der anfallenden Form nicht mehr verwertbar sind, werden sie gemäss der Erfindung einer wärmeisolierten Kammer 14 zugeführt. Diese ist unmittelbar an die Spinnmaschine und die Faserablage und Mattenformkammer 8 angeschlossen, so dass die hinter der Spinnmaschine anfallenden Abfallprodukte unmittelbar in sie gelangen. Die wärmeisolierte Kammer 14 ist derart aufgebaut, dass diese Abfallprodukte in eine in ihr angeordnete Zerkleinerungsmaschine 15 gelangen. Hinter dieser weist die Kammer 14 eine seitlich vorstehende Vorwärmkammer 21 auf, in welche die an der Besäumstation 10, der Formatierstation 11 und der Fehlerkontrollstation 12 anfallenden mit Harz versetzten Randabschnitte und ganzen Ausschussplatten über eine Zerfaserungsmaschine 20 zur Vorwärmung eingespeist werden. Die Materialströme vereinigen sich dann und gelagen in der Kammer in einen Durchlaufofen 16. Diesem wird über ein Rohr 17 Brennstoff zugeführt. In ihm werden die Abfallprodukte im wesentlichen zum Ausgleich von Wärmeverlusten und zur Erzielung der für die anschliessende Heissbrikettierung in einer Heissbrikettiermaschine 18 erforderlichen Temperatur erhitzt. Die herausfallenden heissen und daher noch nicht erstarrten grobkörnigen Abfallprodukte werden in der Wälzdruck-Heissbrikettiermaschine 18 zu Briketts definierter Grösse und Form, z.B. seifenförmigen Stücken von 150 bis 200 cm$^3$ Inhalt, gepresst und gelangen dann nach Abkühlung in einen separaten Bunker 19. Da dieser Bunker ebenfalls über dem Wiegesystem 5 angeordnet ist, lässt sich der Schmelzofen 6 entsprechend der Gesamtrezeptur des Produktionsprozesses sowohl mit Rohprodukten als auch mit den aufbereiteten Abfallprodukten ohne zusätzliche Transportwege über die Fördereinrichtung 5' beschicken.

Die Abfallprodukte nach den Stationen 10, 11 und 12 fallen in bereits gepressten und durch Harz gebundenen Abschnitten oder Platten an. Daher durchlaufen sie zunächst mindestens eine Zerfaserungsmaschine 20 und dann die Vorheizkammer 21 in aufgelockerter Form, bevor sie mit dem sehr heissen Spinnabfallstrom dem Durchlaufofen 16 zugeführt werden. Die Zusammenführung kann auch vor der Zerkleinerungsmaschine 15 erfolgen, wenn eine weitergehende Zerkleinerung als sie durch die Zerfaserungsmaschine 20, z.B. einem Stachelwalzenbrecher, erreicht wird, erwünscht ist. Die Verwertung des Eisenabstiches des im Rohprodukt gebundenen und im Schmelzprozess frei werdenden Eisens ist bekannt und der Vollständigkeit wegen bei 22 am Boden des Schmelzofens angezeigt ist.

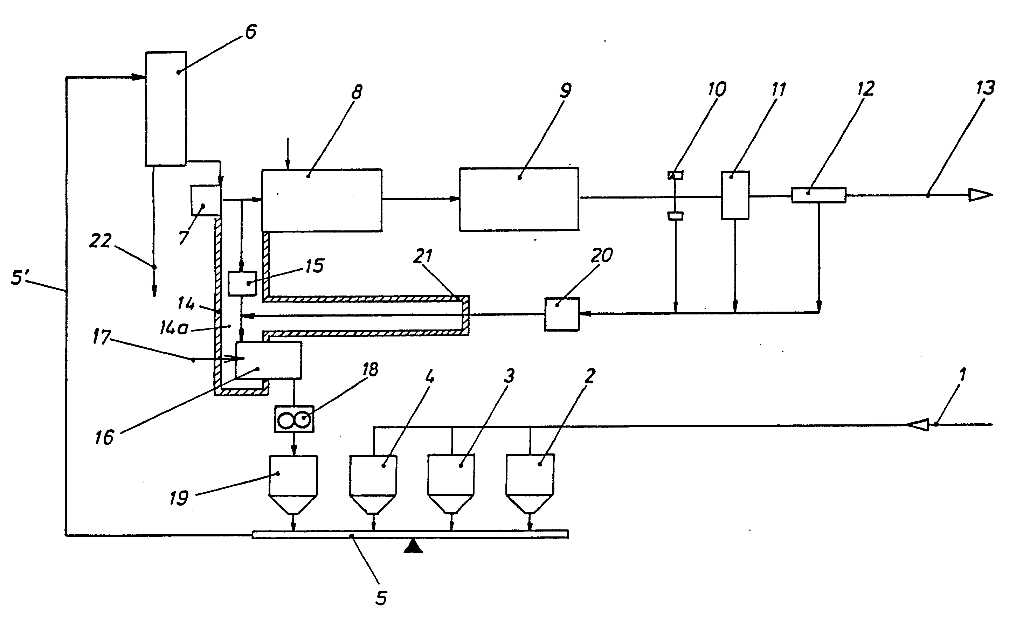

## Patentansprüche

1. Verfahren zur Herstellung von Mineralfasermatten oder -platten, bei dem Ausgangsmaterialien verflüssigt, zu Fasern versponnen, mit einem Bindemittel versetzt und zu Fasermatten abgelegt, ausgehärtet, seitlich besäumt und in Längsabschnitte unterteilt werden, dadurch gekennzeichnet, dass die beim Verspinnen und bei den weiteren Behandlungsschritten bis zur Lagerung mit Temperaturen nahe dem Schmelzpunkt kontinuierlich anfallenden mineralischen Abfallporudkte sofort heisszerkleinert, zum Ausgleich einer Abkühlung wiedererhitzt und dann heissbrikettiert werden, worauf die Briketts den zu verflüssigenden Ausgangsmaterialien zugegeben werden.

2. Verfahren nach Anspruch 1, dadurch gekennzeichnet, dass die Briketts vor der Zugabe zu den Ausgangsmaterialien nach einer Abkühlung zwischengelagert werden.

3. Verfahren nach Anspruch 1 oder 2, dadurch gekennzeichnet, dass die beim Besäumen und Unterteilen der Fasermatte in Längsabschnitte anfallenden mineralischen Abfallprodukte zerfasert, in aufgelockerter Form vorerhitzt und den beim Verspinnen anfallenden heissen Abfallprodukten vor dem Brikettieren zugegeben werden.

4. Verfahren nach Anspruch 3, dadurch gekennzeichnet, dass die zerfaserten Abfallprodukte den anderen Abfallprodukten vor deren Wiedererhitzen zugeführt werden.

5. Einrichtung zur Durchführung des Verfahrens nach einem der Ansprüche 1 bis 4, gekennzeichnet durch eine der Aufnahme der beim Verfahren anfallenden Abfallprodukte dienende wärmeisolierte Kammer (14), welche der Spinnmaschine (7) unmittelbar nachgeordnet ist und in welcher eine Zerkleinerungsmaschine (15) zur Zerkleinerung der beim Verspinnen anfallenden mineralischen Abfallprodukte angeordnet ist, und mit welcher ein Durchlaufofen (16) zum Erhitzen der zerkleinerten Abfallprodukte unmittelbar verbunden ist, sowie durch eine dem Durchlaufofen (16) nachgeordnete Wälzdruck-Heissbrikettiermaschine (18) und durch eine Fördereinrichtung (5) zur Aufgabe der erzeugten Briketts in einen der Spinnmaschine (7) vorgeordneten Schmelzofen (6).

6. Verfahren nach Anspruch 5, gekennzeichnet durch einen der Heissbrikettiermaschine (18) nachgeordneten Zwischenbunker (19) für die Zwischenlagerung der Briketts.

7. Verfahren nach Anspruch 5 oder 6, dadurch gekennzeichnet, dass die wärmeisolierte Kammer (14) im Bereich (14a) nach der Zerkleinerungsmaschine (15) eine Vorheizkammer (21) aufweist, in die der Auslass einer Zerfaserungsmaschine (20) für beim Besäumen und Unterteilen in Längsabschnitte anfallende Abfallprodukte mündet.

## Claims

1. Method for manufacturing mineral-wool mats or slaps in which method base materials are transformed into a liquid state, spun to form fibers, added with a binder and laid down to form mats which are then cured, laterally trimmed and cut to lengths, characterized in that the mineral waste products which result from the spinning operation and the subsequent treating steps up to stocking in a continuous manner at temperatures near their melting point, are immediately hat chopped and reheated to compensate for cooling and are then hot briquetted, whereupon the briquets are added to the base materials which are to be transformed into liquid state.

2. The method according to claim 1, characterized in that prior to adding them to the base materials, the briquets, after cooling, are supplied to a temporary stock means.

3. The method according to claim 1 or 2, characterized in that the mineral waste products resulting from trimming of the fiber mat and from cutting it into lengths, are frayed out, then preheated in opened form and added to the hot waste groducts resulting from spinning, prior to the briquetting stage.

4. The method according to claim 3, characterized in that the frayed out waste products are added to the other waste products prior to reheating the latter.

5. Equipment for carrying out the method according to any of claims 1 to 4, comprising a thermally insulated chamber (14) serving to receive the waste products resulting from the said method, this chamber being installed immediately downstream of the spinning machine (7) and having arranged in it a chopping device (15) for the comminution of the mineral waste products resulting from the spinning operation, a continuous furnace (16) being directly connected with the chamber (14) to heat the chopped waste products, as well as a rotary pressure hot briquetting machine (18) downstream of the continuous furnace (16) and a conveying equipment (5) to feed the briquets produced into a melting furnace (6) upstream of the spinning machine (7).

6. The equipment according to claim 5, characterized in that an intermediary hopper (19) for the temporary stocking of the briquets is arranged downstream of the hot briquetting machine (18).

7. The equipment according to claim 5 or 6, characterized in that in the area (14a) downstream of the chopping device (15), the thermally insulated chamber (14) has a preheating chamber (21) into which opens the outlet of a device (20) for fraying out the waste products resulting from the trimming and length cutting operations.

## Revendications

1. Procédé de fabrication de nattes ou de plaques de fibres minérales, dans lequel des matériaux de base sont transformés en état liquide, filés pour en former des fibres, mélangés avec un liant et déposés pour former des nattes en fibres qui sont ensuites durcies, rognées sur les bords latéraux et tronçonnées, caractérisé en ce que les déchets minéraux qui sont produits continuellement à des températures proches de leur point de fusion lors du filage et lors des autres opérations de traitement jusqu'au stockage, sont immédiatement, en état chaud, réduits en moceraux, réchauffés en compensation d'un refroidissement et ensuite agglomérés chauds, après quoi les agglomérés sont additionnés aux matériaux de base devant être transformés en état liquide.

2. Procédé suivant la revendication 1, caractérisé en ce que avant de les mélanger avec les matériaux de base, les agglomérés, après avoir subi un refroidissement, sont délivrés à un dépôt intérimaire.

3. Procédé suivant la revendication 1 ou 2, caractérisé en ce que les déchets minéraux produits lors du rognage et du tronçonnage de la natte en fibres sont déchiquetés, préchauffés en forme démêlée et additionnés, avant l'agglomération, aux déchets chauds venant du filage.

4. Procédé suivant la revendication 3, caractérisé en ce que les déchets déchiquetés sont additionnés aux autres déchets avant que ces derniers ne soient réchauffés.

5. Dispositif pour la mise en œuvre du procédé suivant l'une ou l'autre des revendications 1 à 4, caractérisé par une chambre calorifugée (14), servant à recevoir les déchets produits par ledit procédé, cette chambre étant installée immédiatement en aval de la machine à filer (7) et renfermant un broyeur (15) pour réduire en morceaux les déchets minéraux produits lors du filage, un four continu (16) étant directement associé avec ladite chambre pour le chauffage des déchets broyés, ainsi que par une machine à agglomérés chauds, à outils rotatifs travaillant avec pression (18), installée en aval du four continu (16), et un convoyeur (5) destiné à alimenter, des agglomérés produits, un four de fusion (6) monté en amont de la machine à filer (7).

6. Dispositif selon la revendication 5, caractérisé par une trémie intermédiaire (19), installée en aval de la machine à agglomérés chauds (18) et destinée au stockage intérimaire des agglomérés.

7. Dispositif suivant la revendication 5 ou 6, caractérisé en ce que dans la zone (14a) qui suit le broyeur (15), la chambre calorifugée (14) comprend une chambre de préchauffage (21) dans laquelle débouche la sortie d'une machine (20) à déchiqueter les déchets de rognage et de tronçonnage.

0 027 277